# EUROPEAN PATENT APPLICATION

(11) **EP 4 550 180 A1**
(43) Date of publication of application: **07.05.2025**
(21) Application number: 23207294.2
(22) Date of filing: 01.11.2023
(51) Int. Cl.: G06F 21/31, G06F 21/60, G06N 20/00, H04L 41/16, H04L 9/40

(54) **A METHOD FOR ADMINISTERING ACCESS RIGHTS TO A UNIT IN A RENEWABLE POWER GENERATING SYSTEM**

(71) Applicant: VESTAS WIND SYSTEMS A/S, 8200 Aarhus N (DK)
(72) Inventor: Teixeira, Luis Miguel, 4815-448 Vizela (PT); Souza Carneiro, Rafael Angelo, 4000-475 Porto (PT); Silva Pereira, Jose Francisco, 4620-221 Lousada (PT)
(74) Representative: Vestas Patents Department

(57) **Abstract**

A method for administering access rights to a unit (11) in a renewable power generating system (1), such as a wind turbine or a wind power plant, is disclosed. A set of access rights is assigned to a user (2), the set of access rights granting permission for the user (2) to perform a set of predefined actions with regard to the renewable power generating system (1). Actions performed by the user (2) with regard to the renewable power generating system (1) are logged and compared to the set of predefined actions related to the set of access rights. In the case that the comparison reveals discrepancies between the performed actions and the set of predefined actions related to the set of access rights, the set of access rights assigned to the user (2) is automatically adjusted, by removing at least some access rights related to predefined actions not being performed. This ensures that users (2) are permitted to perform necessary actions while efficiently avoiding overprivileged users (2).

## Description

### FIELD OF THE INVENTION

The present invention relates to a method for administering access rights for users with regard to a unit in a renewable power generating system. The method according to the invention efficiently ensures that users are only allowed access to an extent required in order for the users to perform their normal tasks.

### BACKGROUND OF THE INVENTION

Various users may have a need for accessing an organization's digital infrastructure. To this end, users are granted access rights defining actions which the respective users are allowed to perform with respect to the digital infrastructure. Not all users will have a need to perform all possible actions or tasks. Therefore it is normally attempted to provide each user with access rights which allow the user to perform required tasks, but no more than that. For instance, particularly critical or high impact actions may require special access rights, beyond those of a standard user.

In spite of such effort when granting access rights to users, a situation may occur where some users have been provided with access rights going beyond, possibly even far beyond, a scope required in order for successful execution of their assigned tasks and responsibilities. Such a situation may be referred to as excessive permissions, overprivileged access or unnecessary privileges, and it may emerge gradually, e.g. as users transition between roles, necessitating adjustments to their access requirements, but without effectuating a corresponding reduction in the granted access rights. Moreover, it may be a difficult task to keep track of which access rights have been granted to which users, as well as keeping track of whether or not the nature of tasks performed by the various users is subject to changes. This is particularly the case in large organisations, where a large number of users need to gain access to the digital infrastructure in order to perform tasks assigned to them.

From a security perspective, the scenario described above is highly undesirable, since users with extensive permissions to access digital infrastructure constitute a vulnerability of the system, since in the case that such a user is compromised, this may potentially result in a malicious party gaining access to large parts of the system, and possibly to very sensitive or critical parts of the system. Thus, overprivileged users expands the potential attack surface of the system, making the system and data contained therein susceptible to exploitation by malicious parties. Moreover, overprivileged users may unintentionally compromise confidentiality, integrity and availability of critical resources, potentially resulting in data breaches, unauthorised changes and/or operational disruptions.

In the case that the digital infrastructure being accessed by the users forms part of a renewable power generating system, such as a wind turbine, a wind farm, a photovoltaic unit, a solar power plant, etc., unauthorised access to the system is particularly problematic, since such systems may be regarded as critical infrastructure. Accordingly, security requirements for such systems are particularly strict.

### DESCRIPTION OF THE INVENTION

It is an object of embodiments of the invention to provide a method for administering access rights to a unit in a renewable power generating system which automatically ensures a high security level.

The invention provides a method for administering access rights to a unit in a renewable power generating system, the method comprising the steps of:
- assigning a set of access rights to a user, the set of access rights granting permission for the user to perform a set of predefined actions with regard to the renewable power generating system,
- logging actions performed by the user with regard to the renewable power generating system and comparing the performed actions to the set of predefined actions related to the set of access rights, and
- in the case that the comparison reveals discrepancies between the performed actions and the set of predefined actions related to the set of access rights, automatically adjusting the set of access rights assigned to the user, by removing at least some access rights related to predefined actions not being performed.

Thus, the method according to the invention is a method for administering access rights to a unit in a renewable power generating system. In the present context the term 'renewable power generating system' should be interpreted to mean an entity being capable of producing electrical power from a renewable energy source. Thus, the renewable power generating system may, e.g., be in the form of a wind turbine, a wind power plant, a photovoltaic unit, a solar power plant, a hybrid power plant, or any other suitable kind of power generating system relying on renewable energy sources.

The unit being accessed is a digitally accessible part of the renewable power generating system, e.g. forming part of a control system of the renewable power generating system. Accordingly, the unit may, e.g., be a controller of a wind turbine, a photovoltaic unit, etc., a relevant switch, a power plant controller (PPC), a Supervisory Control And Data Acquisition (SCADA) server, or any other suitable kind of digitally accessible part of the renewable power generating system. In any event, the unit should be interpreted to be a physical unit being located 'on site', i.e. in or immediately adjacent to the renewable power generating system. In the case that the renewable power generating system is a renewable power plant, such as a wind power plant, a solar power plant or a hybrid power plant, the unit may be located within the boundaries of the renewable power plant.

In the method according to the invention, a set of access rights is initially assigned to a user. The set of access rights grant permission for the user to perform a set of predefined actions with regard to the renewable power generating system, in particular with regard to the unit in the renewable power generating system. Thus, once the set of access rights have been assigned to the user, the user will be allowed to access the unit in the renewable power generating system and perform each of the actions defined by the set of access rights. Accordingly, the set of access rights assigned to the user may advantageously be carefully selected so as to ensure that the user is able to perform tasks which it is expected will form part of the normal duties of the user, while preventing that the user is able to perform tasks or actions which are not expected to form part of the normal duties of the user.

Thus, when the set of access rights has been assigned to the user, the user will access the unit in the renewable power generating system whenever required, and perform any actions with regard to the renewable power generating system which is required in order for the user to fulfil the tasks entrusted to the user. During this, the actions actually performed by the user with regard to the renewable power generating system are logged. This could, e.g., be done by means of a standard logging tool which is installed at the renewable power generating system for other purposes.

The actually performed actions of the user appearing from the logging are compared to the set of predefined actions related to the set of access rights. Accordingly, the actions which the user is actually performing, when attending to the tasks entrusted to the user, and during normal work of the user, are compared to the set of actions which the user is permitted to perform with regard to the renewable power generating system, as per the access rights assigned to the user. This comparison will reveal whether or not the user is in fact using all of the privileges assigned to him or her.

In the case that the comparison reveals discrepancies between the actually performed actions and the set of predefined actions related to the set of access rights, this is an indication that the user is in fact not using all of the privileges assigned to him or her, and that the user may therefore be regarded as overprivileged. Furthermore, the comparison will also reveal which of the predefined actions the user needs to perform in order to handle tasks entrusted to the user, and which actions are not required.

Thus, in the case that the comparison reveals discrepancies as described above, the set of access rights assigned to the user is automatically adjusted. This is done by removing at least some access rights related to predefined actions not being performed by the user.

Accordingly, the permission for the user to be perform actions which appear not to be required in order for the user to perform tasks entrusted to the user during normal work of the user are automatically removed. Furthermore, this is done based on an analysis of the actual behaviour of the user, and it can therefore be assumed that the adjusted set of access rights closely reflect the actual needs of the user. Thus, it is efficiently and automatically ensured that the user is provided with only the access rights required, thereby improving the security of the system with regard to malicious attacks. Furthermore, this is obtained dynamically and based on the actual behaviour of the individual user.

The step of automatically adjusting the set of access rights assigned to the user may comprise reducing the set of predefined actions with regard to the renewable power generating system, which the user is permitted to perform.

According to this embodiment, the access rights being removed when adjusting the set of access rights, are in the form of predefined actions being removed from the set of predefined actions which the user is permitted to perform with regard to the renewable power generating system. Accordingly, after the adjustment has taken place, the user will no longer be permitted to perform certain actions.

The removal of access rights may, e.g., be performed based on a 'least privilege principle', in which the set of predefined actions which the user is allowed to perform corresponds to a minimal set of actions required in order for the user to perform his or her normal duties, thus preventing overprivileged users.

The method may further comprise the step of, upon request, temporarily granting the user permission to performing additional actions with regard to the renewable power generating system.

It may occur that a given user will occasionally need to perform actions with regard to the renewable power generating system, which do not form part of the normal daily duties of that user. In this case it would not be appropriate to grant the user permission to perform such actions as a general rule or on a permanent basis. Therefore, according to this embodiment, the user will normally not be permitted to perform such actions. However, when a need for the user to perform such an action occurs, the user can be provided with access rights permitting the action to be performed, and when the action has been completed, these access rights are removed again, so as to ensure that the user is not permanently permitted to perform the additional actions.

This ensures that the user is allowed to perform any required action, without too many obstacles for the user, and without unduly extending the access rights of the user on a permanent basis.

The step of temporarily granting the user permission to performing additional actions with regard to the renewable power generating system may be subject to separate authentication of the user. For instance, the user may be required to enter a specific administrator password in order to obtain the additional temporary access rights, or the user may be required to separately enter the normal password of the user.

As an alternative, users with occasional need for performing additional actions may be flagged in the system in order to ensure that their access rights are not adjusted, even if the comparison reveals that this would be appropriate.

The step of assigning a set of access rights to the user may comprise categorising the user to a predefined user profile, and the step of automatically adjusting the set of access rights assigned to the user may comprise categorising the user to another predefined user profile.

According to this embodiment, access rights of the users are administered by categorising each user to one of two or more predefined user profiles or roles. Each predefined user profile defines a set of predefined actions, and each user being categorised to a given user profile will be permitted to perform the predefined actions defined by that user profile.

In the case that the comparison reveals discrepancies between actions performed by the user and the set of predefined actions defined by the user profile which the user is categorised to, the user is categorised to another one of the predefined user profiles, which defines a reduced set of predefined actions.

For instance, a user may originally have been categorised as 'administrator', but the logged actions may reveal that the user is in fact acting in a manner expected by a 'standard' user. Accordingly, in this case the user is re-categorised from 'administrator' to 'standard'.

Defining user profiles or roles is a widely used model for administering access rights, and it is an easy and transparent way of keeping track of which access rights are assigned to which users.

As an alternative, the access rights may be assigned in a manual or customized manner, which matches the individual requirements of each user.

In the case that the access rights are assigned by categorising the users to predefined user profiles, the method may further comprise the steps of:
- logging actions performed by users categorised to a certain user profile with regard to the renewable power generating system and comparing the performed actions to the set of predefined actions related to the user profile, and
- in the case that the comparison reveals discrepancies between the performed actions and the set of predefined actions related to the user profile, automatically adjusting the set of access rights related to the user profile, by removing at least some access rights related to predefined actions not being performed, thereby automatically adjusting the user rights assigned to all users being categorised to the user profile.

According to this embodiment, actions performed by users are logged across all users being categorised to a certain user profile, and who may therefore be expected to have similar requirements with respect to which actions they need to be able to perform with regard to the renewable power generating system, in order for them to perform their normal and daily duties and the tasks normally assigned to them. Thus, this results in a vast dataset related to behaviour of users who may be regarded as similar, and who have been assigned identical sets of access rights.

The logged performed actions are compared to the set of predefined actions related to the user profile, and thereby to the set of predefined actions which the users are permitted to perform with regard to the renewable power generating system, according to the access rights assigned to each of the users. This is very similar to the situation described above, where logged actions of a single user are compared to a set of predefined actions, and the remarks set forth above are therefore equally applicable here.

In the case that the comparison reveals discrepancies between the performed actions and the set of predefined actions, the set of access rights related to the user profiles is automatically adjusted by removing at least some of the access rights related to predefined actions not being performed. This is also similar to the situation described above with reference to a single user, and the remarks set forth in this regard are equally applicable here. However, in this case the adjustment of the access rights immediately applies to all users categorised to the user profile in question. Furthermore, it is ensured that users being categorised to that user profile at a later point in time are assigned the reduced set of access rights.

Thus, according to this embodiment, the adjustment of the access rights is performed on a user profile level rather than, or in addition to, on a single user level. This ensures that the decision regarding whether or not to adjust the access rights is taken based on a vast amount of data, in the form of logged actions performed by a plurality of user. It can therefore be assumed that the resulting adjusted set of access rights accurately reflects the needs of users being categorised to a given user profile. Furthermore, this reduces the risk of new users being overprivileged, and access rights of a given user may be adjusted before a sufficient number of actions performed by that user have been logged to determine that the access rights of the user need to be adjusted.

The renewable energy generating system may be a wind turbine or a wind power plant. In the present context the term 'wind power plant' should be interpreted to mean a group of at least two wind turbines sharing infrastructure for power transmission to a power grid. Thus, the wind power plant may comprise a plurality of wind turbines which may be arranged at a geographical site, and may be controlled by means of a central control unit, sometimes referred to as a power plant controller (PPC).

In the case that the renewable energy generating system is a wind turbine, the unit being accessed may, e.g., be a controller, a switch, a sensor, or any other suitable kind of digitally accessible unit in the wind turbine. In the case that the renewable energy generating system is a wind power plant, the unit being accessed may be a unit in one of the wind turbines of the wind power plant, as described above. Alternatively, the unit being accessed may be a unit which is associated with the overall operation of the wind power plant, such as a PPC or a SCADA server.

Thus, according to this embodiment, the access rights relate to permissions of the user to perform actions with respect to at least one wind turbine. Wind turbines and wind power plants are relevant examples of entities being capable of producing power from a renewable energy source, i.e. the wind, and which may be regarded as critical infrastructure. Accordingly, it is suitable to apply the method according to the invention for administering access rights to a unit in a wind turbine or a wind power plant.

The access rights could, e.g., relate to access for the user to control systems of the wind turbine and/or the wind power plant, e.g. to a PPC.

Alternatively or additionally, the renewable power generating system may be or comprise one or more photovoltaic units, a solar power plant, a hybrid power plant, or any other suitable kind of renewable power generating system.

The step of logging actions performed by the user may comprise performing artificial intelligence (AI) driven analysis on logged data.

According to this embodiment, analysis of the data related to the logged actions and the comparison between the performed actions and the set of predefined actions are performed by means of a trained AI engine. For instance, the AI driven analysis may comprise identifying patterns in the actions performed by the user, and comparing the identified patterns to expected behaviour of a user requiring the full set of assigned access rights.

AI systems are suitable for handling large sets of data and identifying patterns in the data. Thus, AI systems are also suitable for revealing whether or not there are discrepancies between actual behaviour of a user and expected behaviour of the user. Applying an AI system for the analysis of the logged data, and basing the automatic adjustment of the access rights of the user on the output of the AI system, may therefore be assumed to result in adjusted access right which accurately reflect the actual needs of the user.

### BRIEF DESCRIPTION OF THE DRAWINGS

The invention will now be described in further detail with reference to the accompanying drawings in which
Fig. 1 is a schematic diagram illustrating a method according to an embodiment of the invention, and
Fig. 2 is a flow chart illustrating a method according to an embodiment of the invention.

### DETAILED DESCRIPTION OF THE DRAWINGS

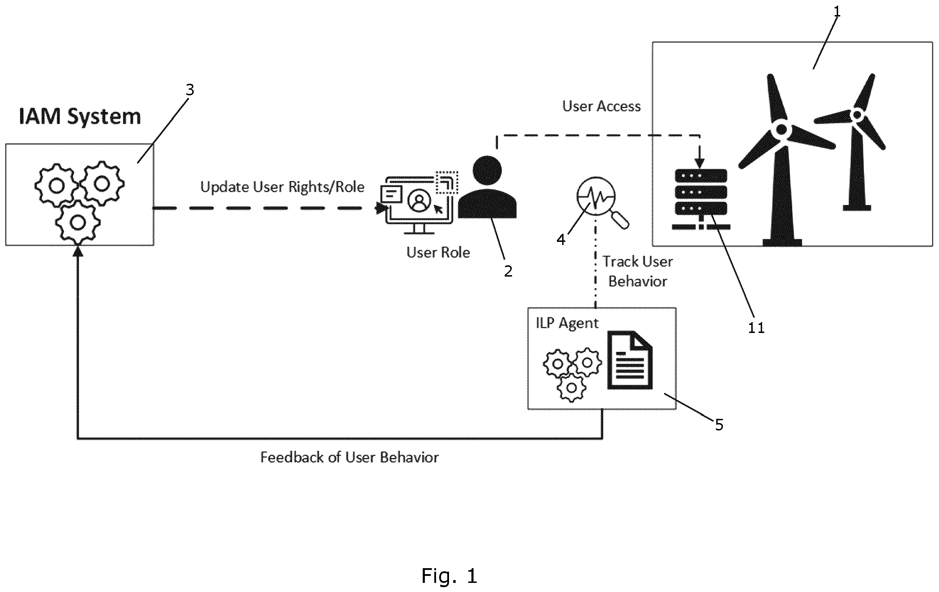

Fig. 1 is a schematic diagram illustrating a method according to an embodiment of the invention, in which access rights to a unit 11 in a renewable power generating system 1, in the form of a wind power plant, are administered. A set of access rights is initially assigned to a user 2 by an access manager 3. The set access rights specify a set of predefined actions which the user 2 is permitted to perform with regard to the renewable power generating system 1. The access rights may, e.g., be assigned to the user 2 by categorising the user 2 to a predefined user profile. In any event, the initially assigned set of access rights is selected in a manner which is believed to match the needs of the user 2 with respect to performing actions with regard to the renewable power generating system 1, as part of normal duties of the user 2.

The user 2 then performs his or her normal duties, including accessing the unit 11 in the renewable power generating system 1 and performing required actions with regard thereto whenever and to the extent this is necessary in order to perform the tasks entrusted to the user 2. During this, the actions performed by the user 2 are logged by a logging agent 4, and the logged data is supplied to an analysis unit 5, e.g. including an AI engine.

The analysis unit 5 then analyses the logged data and compares the actions which have actually been performed by the user 2 to the set of predefined actions defined by the set of access rights which were initially assigned to the user 2. This comparison reveals whether or not there are discrepancies between the actually performed actions and the set of predefined actions. Moreover, in the case of discrepancies, the comparison also reveals which of the predefined actions the user 2 is normally not performing.

The result of the analysis and comparison is communicated to the access manager 3. Based thereon, the access manager 3 automatically adjusts the set of access rights of the user by removing at least some of the actions which the user 2 are not currently performing from the set of predefined access rights. This could, e.g., be done by categorising the user to another user profile with a lower level of access.

The adjusted set of access rights is communicated to the user 2, and the user 2 will no longer be permitted the perform the actions which were removed from the set of predefined actions with regard to the renewable power generating system 1.

Thus, it is assured that the user 2 is permitted to perform actions with regard to the renewable power generating system 1 which are required in order for the user 2 to handle tasks entrusted to the user 2 as part of his or her normal daily duties, but not more than that. Accordingly, overprivileged users are avoided in an easy and accurate manner.

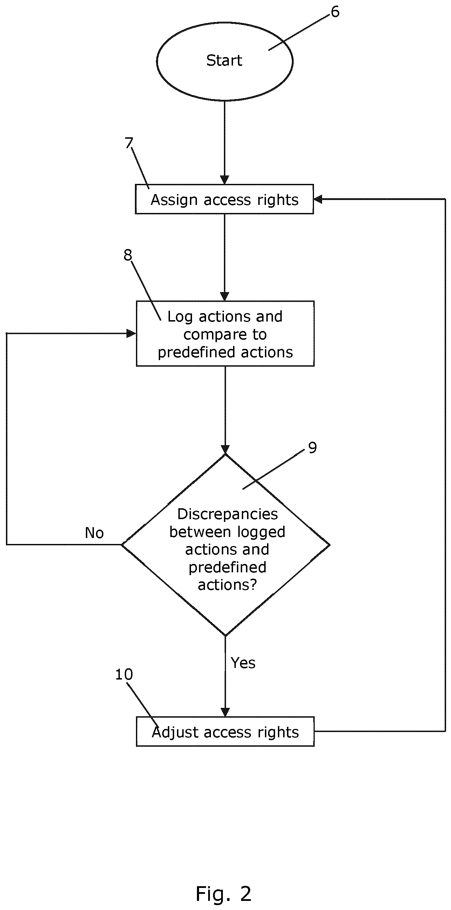

Fig. 2 is a flow chart illustrating a method according to an embodiment of the invention. The process is started at step 6. At step 7, a set of access rights is assigned to a user. The set of access rights defines a set of predefined actions with regard to a renewable power generating system and grants the user permission to perform these predefined actions.

At step 8, action performed by the user with regard to the renewable power generating system, while performing his or her normal duties, are logged. Furthermore, the logged actions, i.e. actions which were actually performed by the user, are compared to the set of predefined actions related to the set of access rights which were assigned to the user. This could, e.g., be performed by means of AI driven analysis, e.g. including identifying patterns in the actions performed by the user and comparing the identified patterns to expected behaviour of a user requiring the full set of assigned access rights.

At step 9, it is investigated whether or not there are discrepancies between the actions which were actually performed by the user and the set of predefined actions, which the user is permitted to perform according to the assigned set of access rights. If this is not the case, it can be concluded that the assigned set of access rights match the needs of the user well, and the process is returned to step 8 for continued logging of the actions performed by the user with regard to the renewable power generating system.

In the case that step 9 reveals discrepancies between the actually performed actions and the set of predefined actions, this is an indication that there is a mismatch between the set of actions which the user is permitted to perform according to the assigned set of access rights and the actions which the user actually needs to perform as part of his or her normal duties. Thus, this is an indication that the user is in fact overprivileged. Therefore, in this case the process is forwarded to step 10, where the set of access rights is automatically adjusted by removing at least some of the actions which the user appears not to be performing from the set of predefined actions. As a consequence, the user will no longer be permitted to perform these actions, and may therefore no longer be regarded as being overprivileged.

Finally, the process is returned to step 7, where the adjusted set of access rights is assigned to the user.

## Claims

1. A method for administering access rights to a unit (11) in a renewable power generating system (1), the method comprising the steps of:
- assigning a set of access rights to a user (2), the set of access rights granting permission for the user (2) to perform a set of predefined actions with regard to the renewable power generating system (1),
- logging actions performed by the user (2) with regard to the renewable power generating system (1) and comparing the performed actions to the set of predefined actions related to the set of access rights, and
- in the case that the comparison reveals discrepancies between the performed actions and the set of predefined actions related to the set of access rights, automatically adjusting the set of access rights assigned to the user (2), by removing at least some access rights related to predefined actions not being performed.

2. A method according to claim 1, wherein the step of automatically adjusting the set of access rights assigned to the user (2) comprises reducing the set of predefined actions with regard to the renewable power generating system (1), which the user (2) is permitted to perform.

3. A method according to claim 1 or 2, further comprising the step of, upon request, temporarily granting the user (2) permission to performing additional actions with regard to the renewable power generating system (1).

4. A method according to claim 3, wherein the step of temporarily granting the user (2) permission to performing additional actions with regard to the renewable power generating system (1) is subject to separate authentication of the user (2).

5. A method according to any of the preceding claims, wherein the step of assigning a set of access rights to the user (2) comprises categorising the user (2) to a predefined user profile, and wherein the step of automatically adjusting the set of access rights assigned to the user (2) comprises categorising the user (2) to another predefined user profile.

6. A method according to claim 5, further comprising the steps of:
- logging actions performed by users (2) categorised to a certain user profile with regard to the renewable power generating system (1) and comparing the performed actions to the set of predefined actions related to the user profile, and
- in the case that the comparison reveals discrepancies between the performed actions and the set of predefined actions related to the user profile, automatically adjusting the set of access rights related to the user profile, by removing at least some access rights related to predefined actions not being performed, thereby automatically adjusting the user rights assigned to all users (2) being categorised to the user profile.

7. A method according to any of the preceding claims, wherein the renewable energy generating system (1) is a wind turbine or a wind power plant.

8. A method according to any of the preceding claims, wherein the step of logging actions performed by the user (2) comprises performing artificial intelligence (AI) driven analysis on logged data.

9. A method according to claim 8, wherein the AI driven analysis comprises identifying patterns in the actions performed by the user (2), and comparing the identified patterns to expected behaviour of a user (2) requiring the full set of assigned access rights.
